# EUROPEAN PATENT APPLICATION

(11) **EP 2 465 352 A1**
(43) Date of publication of application: **20.06.2012**
(21) Application number: 10015765.0
(22) Date of filing: 17.12.2010
(51) Int. Cl.: A21C 1/02, A21C 1/14, B01F 7/00, B01F 7/16, B01F 15/00, A21B 7/00

(54) **Apparatus and method for the preparation of a bakery product**

(71) Applicant: Barilla G. e R. Fratelli S.p.A., 43100 Parma (IT)
(72) Inventor: Torricelli, Roberto, 43122 Parma (IT); Giovanetti, Marco, 43123 Parma (IT)
(74) Representative: Ferreccio, Rinaldo

(57) **Abstract**

Apparatus and method for the preparation of a bakery product, that can be completely automated, comprising a container (10) and a kneading blade (11) that can be set in rotation according to a rotation axis (X) perpendicular to a bottom plane (10a) of the container (10), the kneading blade (11) being hinged near to the bottom plane (10a) of said container according to a hinging axis (Y) perpendicular to the rotation axis (X) by means of a hinge (12), said hinge (12) allowing an angular excursion of the kneading blade (11) from an operation position wherein the kneading blade (11) is placed in an erect position with respect to the bottom plane (10a) of the container (10) and a resting position wherein the kneading blade (11) is placed lying on the bottom plane (10a) of the container (10) and vice versa, stop means being arranged to limit said angular excursion so that the kneading blade (11) is prevented from rotating beyond the operating position with respect to the hinging axis (Y).

## Description

### Field of application

The present invention refers to an apparatus for the preparation of a bakery product, in particular to a kneader-oven intended for the production of bread at home.

The invention also refers to a method for the preparation of a bakery product, in particular bread, using the aforementioned apparatus.

### Prior art

The market of household electric appliances has been offering for some time now apparatuses for the preparation of bakery products, such as kneader-ovens intended for making bread and similar. Such apparatuses, generally known as bread machines, despite being small and appropriate for use at home, integrate inside them the functions of a kneader and of an oven, so as to be able to almost automatically carry out all the operations necessary to obtain a bakery product from flour, water and yeast, with possible added ingredients.

In particular, these apparatuses have a container, positioned inside a baking chamber, equipped with one or more kneading blades actuated by an electric motor. The introduction of the ingredients into the container and the subsequent actuation of the electric motor thus make it possible to obtain a mixture; after a possible leavening step, suitable heating means raise the temperature inside the baking chamber to bake the obtained mixture. An electronic control unit, which can be programmed by the user, automatically controls the various aforementioned steps.

Although they substantially meet the requirements of the market, the aforementioned apparatuses have, in any case, some drawbacks that to this day have not yet been solved.

One of such drawbacks concerns the presence itself of the kneading blades that, although being necessary in order to obtain the mixture, get in the way in the subsequent baking step. Indeed, if such blades are not removed manually before the baking operation, they get caught inside the finished bakery product mixture that has already solidified, causing obvious problems related to the appearance of the product itself and to its extraction from the baking container.

To this day, in order to avoid such a possibility, in some cases it is foreseen for there to be a manual removal of the blades, requiring a supplementary operation of the user and there is thus a reduced level of automation of the preparation procedure.

The technical problem forming the basis of the present finding is that of devising an apparatus for the preparation of a bakery product that makes it possible to remove the blades from the mixture automatically and without causing an excessive increase of the production costs of the device.

### Summary of the invention

The technical problem identified above is solved by an apparatus for the preparation of a bakery product of the type comprising a container and a kneading blade that can be set in rotation according to a rotation axis that is perpendicular to a bottom plane of the container, in which the kneading blade is hinged near to the bottom plane of the container, according to a hinging axis that is perpendicular to the rotation axis, by means of a hinge that allows an angular excursion of the kneading blade from an operation position, in which the kneading blade is arranged in a position that is erect with respect to the bottom plane of the container, and a resting position, in which the kneading blade is arranged lying on the bottom plane of the container, and *vice versa,* stop means being arranged to limit said angular excursion so that the kneading blade is prevented from rotating beyond the operating position with respect to the hinging axis.

It should be noted how the kneading blade is kept in the operation position when it operates in a first rotation direction, at which the pressure of the mixture operates against the stop means.

On the other hand, the kneading blade can be arranged in the resting position by simply making it rotate for a small angle in the opposite rotation direction, since in such a case the pressure of the mixture acts in an opposite direction and cannot be balanced by the single direction constraint formed by the stop means.

In this way, it is possible to carry out the kneading by operating the blade in the first rotation direction, to then fold back the blade into the resting position with a small counter-rotation when the mixture has the desired consistency.

The hinge is preferably interposed between the kneading blade and a rotary shaft set in rotation by a motor, the rotary shaft passing through a hole formed on the bottom plane of the container.

The stop means are advantageously a stop shoulder for the kneading blade, said stop shoulder being formed on the rotary shaft.

The kneading blade advantageously has a substantially planar configuration, so as to not interfere with the body of the mixture when in the resting position. The thickness of the blade is preferably of between 1 and 5 mm.

The kneading blade is preferably configured so that its lower edge is arranged tight against the bottom plane of the container when the blade is in the operation position.

The container can be provided along its edge with indentations, that cooperate with the kneading blade to cause an effective kneading action.

Again to improve the efficiency of the kneading action, the container has a substantially cylindrical circular shape.

The apparatus according to the present invention also preferably comprises heating means intended for baking a mixture contained inside the container.

The technical problem identified above is moreover solved with a method for preparing a bakery product with an apparatus of the aforementioned type, comprising the steps of:
- placing ingredients in the container to produce a desired mixture;
- setting the blade in rotation with respect to the rotation axis according to a first rotation direction, said blade being arranged in the operation position; once the desired consistency of the mixture has been reached,
- setting the blade in counter-rotation by making it rotate with respect to the rotation axis according to a rotation direction that is opposite to said first rotation direction, said counter-rotation of the blade causing the blade itself to flip from the operation position to the resting position, where the blade is arranged with its face against the bottom plane of the container,
- baking the obtained mixture inside the container itself to obtain a desired bakery product.

Further characteristics and advantages shall become clearer, in the rest of the description, from the detailed description of a preferred but not exclusive embodiment of the present invention, with reference to the attached figures, given as an example and not for limiting purposes.

### Brief description of the drawings

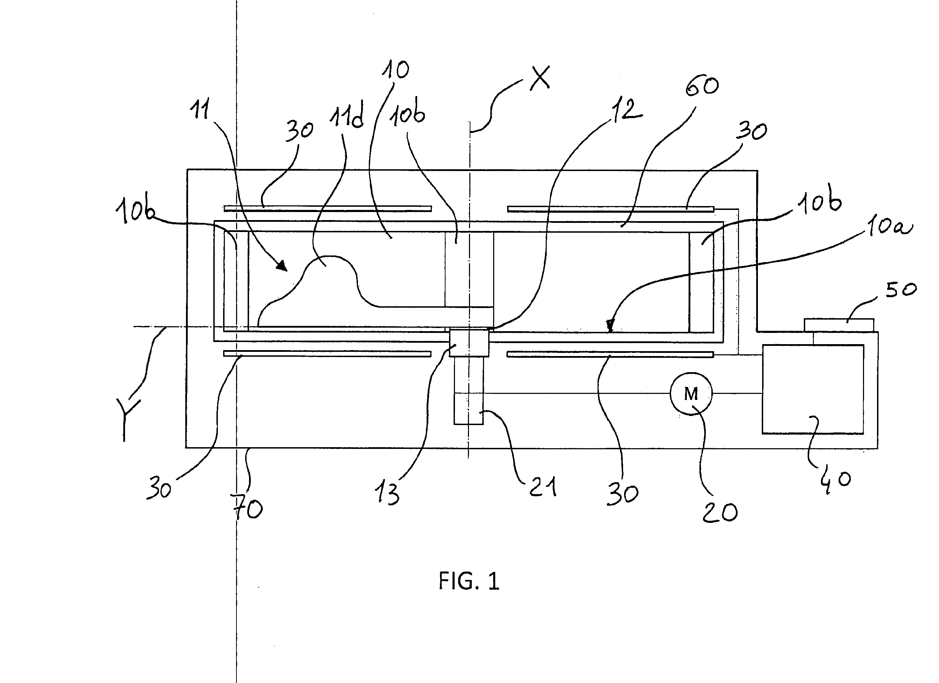

- Figure 1 is a schematic view in section according to a vertical plane of an apparatus for the preparation of a bakery product according to the present invention;
- figure 2 is a perspective view of a component of the apparatus in figure 1 arranged in a first configuration;
- figure 3 is a perspective view of a component of the apparatus in figure 1 arranged in a second configuration.

### Detailed description

With reference to the attached figures, an apparatus for the preparation of a bakery product, in particular for the preparation of bread has been identified with reference numeral 1.

Such an apparatus 1 comprises an outer casing 70 inside which there is a baking chamber 60. Inside such a baking chamber 60 a container 10 is removably arranged, inside which the mixing and subsequent baking operations of the bakery product are carried out.

The apparatus 1 comprises heating means 30, which in this case are a plurality of heat plates arranged at the outer walls that define the baking chamber 60. Such hot plates are used to raise the temperature inside the baking chamber 60, so that the apparatus can carry out the oven functions it is required to have.

The apparatus 1 moreover comprises an electric motor 20, arranged inside the outer casing 70 inside a recess separated with respect to the baking chamber 60, possibly thermally isolated with respect thereto. Said electric motor 20 is kinematically connected, for example by means of a belt drive, to a shaft 21 that can rotate according to a vertical rotation axis X. The upper part of said shaft 21 faces the bottom of the baking chamber 60, and foresees a coupling profile intended to allow it to be locked together with another element.

The container 10 has a substantially cylindrical shape defined by a side wall and by a bottom wall, which inside defines a bottom plane 10a. A plurality of semi-cylindrical shaped indentations 10b project along the inner profile of the side wall. In the present embodiment there are four indentations, equally spaced along the profile of the side wall.

The bottom wall is passed, in its central point, by a hole that houses an insert 13 that can rotate with respect to the container 10. The rotary insert 13 foresees a lower coupling profile intended to lock onto the coupling profile of the shaft 21, making it possible, when the container 10 is correctly inserted inside the baking chamber 60, to achieve a kinematic coupling between the two elements.

In order to allow the kneading operations, the apparatus 1 foresees a kneading blade 11. One end of the kneading blade 11 is fixedly connected by means of a hinge 12, the function of which shall be further described in the rest of the description, to the rotary insert 13 of the container 10; from such an end the kneading blade mainly extends in a radial direction towards the side wall of the container 10.

The kneading blade 11 has a substantially planar profile, equipped with a thickness of between 1 mm and 5 mm, thus having a front face 11b and an opposite rear face 11c.

When the container 10 is correctly arranged inside the baking chamber 60, the rotary insert 13 locks onto the shaft 21 obtaining a kinematic connection between the electric motor 20 and the kneading blade 11. The kneading blade 11 can then be set in rotation by the electric motor 20 according to the previously identified vertical rotation axis X.

The hinge 12 also allows an angular excursion of the kneading blade 11 according to a hinging axis Y that is radial with respect to the container 10; such an axis therefore projects perpendicular with respect to the aforementioned rotation axis X.

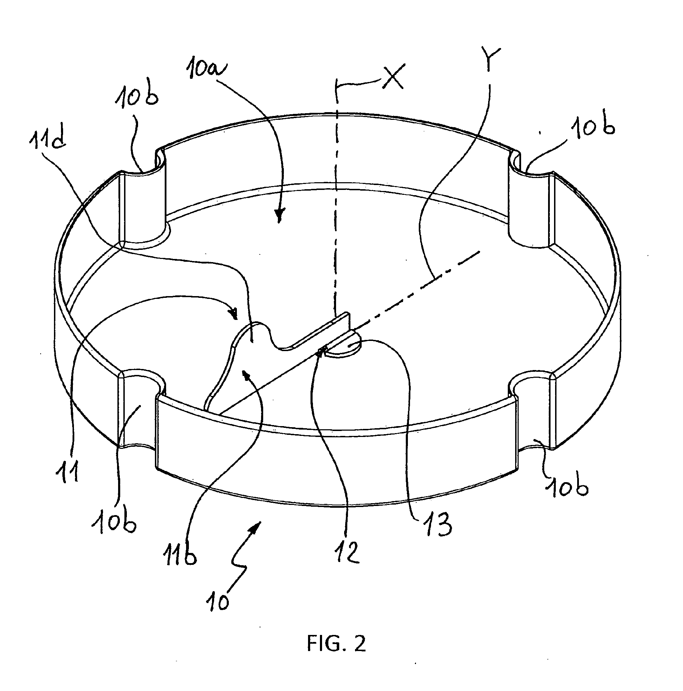

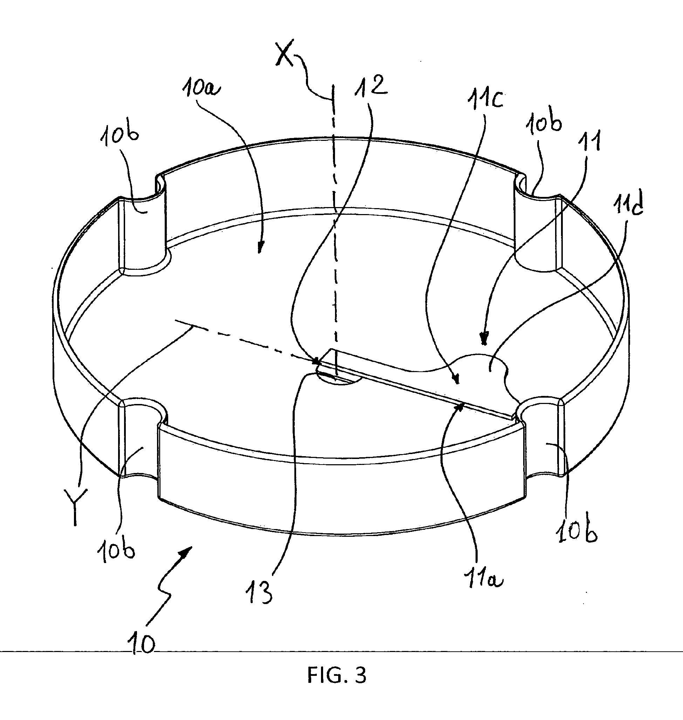

The angular excursion according to the hinging axis Y allows the kneading blade 11 to rotate between an unfolded operation position (Fig.2) and a folded resting position (Fig.3).

In the operation position, illustrated in figure 2, the kneading blade 11 is erect with respect to the bottom plane of the container 10a, forming a substantially right angle with said plane. In this position the kneading blade 11 is capable of carrying out the actual kneading operation of the ingredients inserted into the container 10.

In particular, the kneading blade 11 is configured so that, in said operation position, its lower edge 11a moves tight against the bottom plane 10a of the container 10 during the forward rotation of the blade itself.

The upper edge of the blade, on the other hand, has a curved profile, with a protuberance 11d with greatest height at its peripheral end.

Moreover, the kneading blade 11 extends radially so as to transit near to the indentations 10b of the container during its rotation. In such a way the blade cooperates with such indentations so as to obtain a better kneading.

In the resting position, illustrated in figure 3, the kneading blade 11 is folded so as to lie on the bottom plane 10a of the container 10. In such a position, the kneading blade cannot carry out kneading operations; on the other hand, such a position is advantageous when it is desired to go ahead with the leavening operation and the subsequent baking of the just prepared mixture, since the folded kneading blade 11 is located outside the mixture, so as to ensure a bakery product, after being baked, that is without cavities at the blade, as typically occurs in conventional apparatuses.

The angular excursion of the kneading blade 11 according to the hinging axis Y is on one side limited by the impact of the front face 11b of the blade against the bottom plane 10a of the container 10, and on the other side it is limited by stop means arranged so as to prevent the operation position to be exceeded during the unfolding of the blade.

In this specific case, such stop means are a stop shoulder 14 formed on the rotary insert 13, against which a portion of the rear face 11c goes into abutment when the kneading blade 11 is in the operation position.

The apparatus 1, according to the present embodiment, comprises programming and control means 50 that can be accessed from outside, which allow a user to start the preparation operations of a bakery product, possibly by selecting a predetermined kneading, leavening and baking program. Such programming and control means communicate with an electronic control unit 40 arranged to actuate the electric motor 20 and the heating means 30.

Operatively, the aforementioned apparatus for the preparation of a bakery product 1 can prepare a bakery product according to a method comprising the following steps.

In a first arrangement step of the ingredients, certain ingredients intended to produce a desired mixture, for example a mixture of bread are inserted inside the container 10. This step is preferably carried out by a human user, who can extract the container 10 from the baking chamber 60 to facilitate the operation of inserting the ingredients. Once the insertion has been completed, the user must in any case correctly reposition the container 10 inside the baking chamber 60, carefully making sure that the rotary insert 13 is locked on the shaft 21.

At the end of this step, the user can activate the apparatus 1 through the programming and control means 50, so that the subsequent steps are operated automatically by the electronic control unit 40 connected to such means.

In a possible subsequent preheating step, the electronic control unit 40 can activate the heating means 60 to bring all the ingredients contained inside the container 10 to a temperature that is suitable for being kneaded.

In a subsequent kneading step, the electronic control unit 40 actuates the electric motor 20 so as to bring the kneading blade 11 in rotation with respect to the rotation axis X according to a first rotation direction. The first rotation direction is such that the kneading blade 11, in the operation position, moves in the direction from its rear face 11c to its front face 11b, in the example of figures 2 and 3 in an anticlockwise direction. It is thus the front face 11b that exerts pressure on the ingredients to be kneaded during the operation.

When it is set in rotation, the kneading blade 11 can be in the operation position (erect) or in the resting position (lying down).

If the blade is in the operation position, the pressure of the ingredients on its front face 11b and the opposite constraint action of the stop shoulder 14 contribute towards keeping it in position.

When, on the other hand, it is in the resting position, the pressure of the ingredients on the edge of the blade, combined with the rotation of the blade 11, provide for unfolding the blade until the operation position has been reached, in which it is balanced by the aforementioned constraint action.

In both cases, the kneading blade 11 is in the operation position, being able to carry out its function. The ingredients are thus kneaded so as to form a mixture with the desired consistency.

At the end of the kneading step it is foreseen for there to be a refolding step of the kneading blade.

In this step, the electronic control unit 40 sets the electric motor 20 in counter-rotation with respect to the previous step, thus making the kneading blade 11 rotate, for a short distance, according to a rotation direction that is opposite to the first rotation direction previously identified, in the example of figures 2 and 3 in a clockwise direction.

By setting the blade in counter-rotation, the pressure of the formed mixture acts no longer, as previously, against the front face 11b of the blade, but against the rear face 11c thereof. Such a pressure is no longer balanced by the constraint reaction of the stop shoulder 14, and thus causes the kneading blade 11 to flip from the operation position to the resting position, where the kneading blade 11 is positioned with its face against the bottom plane 10a of the container.

The method then foresees a possible waiting step intended to allow the mixture to leaven.

Finally a baking step is foreseen, in which the electronic control unit 40 provides for actuating the heating means 60 so as to obtain the final baking of the mixture, to obtain the desired bakery product.

As can be appreciated from what has been described, the apparatus for the preparation of a bakery product and the relative method according to the present invention make it possible to satisfy the requirements and to overcome the drawbacks which have been mentioned in the introductory part of the present description with reference to the prior art.

Of course, a person skilled in the art can carry out numerous modifications and variants to the aforementioned apparatus and the method for the preparation of a bakery product, in order to satisfy contingent and specific requirements, all of which are covered by the scope of protection of the invention, as defined by the following claims.

## Claims

1. Apparatus (1) for the preparation of a bakery product comprising a container (10), a kneading blade (11) that can be set in rotation according to a rotation axis (X) perpendicular to a bottom plane (10a) of the container (10), **characterised in that** said kneading blade (11) is hinged near to the bottom plane (10a) of said container according to a hinging axis (Y) perpendicular to the rotation axis (X) by means of a hinge (12), said hinge (12) allowing an angular excursion of the kneading blade (11) from an operation position wherein the kneading blade (11) is placed in an erect position with respect to the bottom plane (10a) of the container (10) and a resting position wherein the kneading blade (11) is placed lying on the bottom plane (10a) of the container (10) and *vice versα,* stop means being arranged to limit said angular excursion so that the kneading blade (11) is prevented from rotating beyond the operating position with respect to the hinging axis (Y).

2. Apparatus (1) according to claim 1, wherein the hinge (12) is interposed between the kneading blade (11) and a rotary insert (13) set in rotation by a motor (20), the rotary insert (13) passing through a hole formed on the bottom plane (10a) of the container (10).

3. Apparatus (1) according to claim 2, wherein said stop means are a stop shoulder (14) for the kneading blade (11), said stop shoulder (14) being formed on the rotary insert (13).

4. Apparatus (1) according to any one of the previous claims, wherein the kneading blade (11) has a substantially planar configuration.

5. Apparatus (1) according to claim 4, wherein said kneading blade (11) is configured so that its lower edge (11a) is placed tight against the bottom plane (10a) of the container (10) when the kneading blade (11) is in its operation position.

6. Apparatus (1) according to claim 5, wherein said kneading blade (11) has a thickness of between 1 mm and 5 mm.

7. Apparatus (1) according to any one of the previous claims, wherein the container (10) is provided with indentations (10b) along an inner profile.

8. Apparatus (1) according to any one of the previous claims, wherein said container (10) has a substantially cylindrical shape.

9. Apparatus (1) according to any one of the previous claims, comprising heating means (30) intended for baking a mixture contained inside the container (10).

10. A method for the preparation of a bakery product with an apparatus (1) according to any one of claims 1-9, comprising the steps of:
- placing ingredients for producing a desired mixture in the container (10);
- setting the kneading blade (11) in rotation with respect to the rotation axis (X) according to a first rotation direction, said kneading blade (11) being placed in its operation position; once the mixture has reached the desired consistency,
- setting the kneading blade (11) in counter-rotation making it rotate with respect to the rotation axis (X) according to a rotation direction opposite to said first rotation direction, said counter-rotation of the blade causing the kneading blade (11) itself to flip from the operation position to the resting position, where the kneading blade (11) is positioned with its face against the bottom plane (10a) of the container,
- baking the mixture obtained inside the container (10) itself so as to obtain a desired bakery product.
